# EUROPEAN PATENT SPECIFICATION

(11) **EP 0 902 998 B1**
(45) Date of publication and mention of the grant of the patent: **27.10.2004**
(21) Application number: 97924159.3
(22) Date of filing: 03.06.1997
(51) Int. Cl.: H02H 7/04

(54) **TRANSFORMER WITH PROTECTION DEVICE**
TRANSFORMATOR MIT SCHUTZEINRICHTUNG
TRANSFORMATEUR EQUIPE D'UN DISPOSITIF DE PROTECTION

(30) Priority: 04.06.1996 GB 9611623
(43) Date of publication of application: 24.03.1999
(73) Proprietor: Tyco Electronics UK Limited, Swindon, Wiltshire SN3 5HH (GB)
(72) Inventor: DOONE, Rodney, Meredith, West Sussex RH15 0DE (GB); WILLIAMS, Stuart, Leicestershire LE11 4FX (GB)
(74) Representative: Jay, Anthony William
(86) International application number: PCT/GB1997/001494
(87) International publication number: WO 1997/047064

(56) References cited:
- GB-A- 390 102
- GB-A- 2 188 199
- US-A- 4 604 673
- US-A- 4 881 147
- US-A- 5 184 270

## Description

### Field of the Invention:

This invention relates generally to improvements in or relating to electrical power distribution and more particularly concerns the protection of power distribution transformers, as are used in the UK and elsewhere for transforming the high voltages employed for power transmission to the low voltages utilized at domestic and industrial installations, against the adverse effects of lightning strikes. The invention is particularly, but not exclusively, concerned with pole mounted electrical power distribution transformers.

### Background of the Invention:

There are upwards of 1 million power distribution transformers in the UK for transforming the 11kV power distribution voltage to the 400V phase-to-phase domestic/industrial service voltage, and there are many more such transformers in continental Europe where typically the distribution voltage is 20kV. In addition to three phase transformers as are commonly used in industrial situations, there are single phase transformers for domestic or light industrial situations. The majority of such transformers are pole mounted.

Each year in the UK there are many thousands of failures of pole mounted transformers during lightning activity. These have been attributed to lightning strikes either on or near to overhead high voltage power distribution lines that are coupled to the transformers or on the metal casings of the transformers themselves. To protect the transformer against such occurrences it has long been conventional to provide an earth (ground) connection to the transformer casing and to provide surge diverter devices connected between the high voltage. terminations of the transformer and its grounded casing. As is well known, a surge diverter is a device such as an arc gap for example which is normally very high resistance but which provides a low resistance through path under high voltage.

The mechanism whereby transformers can suffer damage by lightning strikes despite the provision of high voltage surge diverter protection has not been understood and has been the subject of much discussion over a considerable number of years. Transformers are relatively expensive devices and their failure gives rise to significant expense not only in replacement costs, but also arising out of the disruption that is caused to electricity users by the failure of their electricity supply.

GB-A-390 102 describes a number of measures for protecting distribution transformers from lightning strikes. In accordance with one prior art proposal described in GB-A-390 102 a discharge gap having a breakdown voltage less than the breakdown strength of the transformer insulation is placed in the circuit to protect the transformer and drain off surge voltages, the arrangement for distribution transformers comprising the provision of a flashover point, in the form of stud type bushings, between the transformer winding and the transformer casing. For pole mounted equipment, this arrangement, which necessitates that the transformer casing be connected to ground, is said in GB-A-390 102 to be undesirable since it exposes workmen to hazard and does not provide for quenching of the arc when flashover does occur.

In accordance with another prior art proposal. mentioned in GB-A-390 102, lightning arresters are connected to each electrical lead connected to the transformer, the lightning arresters being grounded in order to drain off surge potentials seeking to enter the transformer. The teaching of GB-A-390 102 is that this method of protection is inadequate unless the resistance of the ground connection is relatively low and the electrical length of the grounded conductor relatively short, since otherwise a high surge potential will be built up upon the winding resulting in insulation damage.

The invention of GB-A-390 102 provides for high tension electrical discharge devices to be connected between each of the terminals on the high tension winding of the transformer and the transformer tank, and a low tension electrical discharge device to be connected between the tank and the grounded neutral of the low tension winding. Resistance elements are proposed to be provided in series with each discharge device for limiting follow current, and a self-quenching arc gap type discharge device combined with a resistor element is described. The high-tension discharge devices are said to have a breakdown voltage sufficiently high that an arc discharge will not be initiated by the customary dynamic voltage applied to the high tension line, and the low tension discharge device is said to have a cut-off voltage higher than the normal crest voltage of the low tension winding.

For various reasons, some of which will be explained in the following, none of the measures described in GB-A-390 102 are utilized in present day distribution transformer installations.

### Summary of the Invention:

We have investigated the problem of lightning induced transformer failure in collaboration with East Midlands Electricity PLC who, in common with other electricity companies in the UK, have suffered an unacceptable level of transformer failure. Our investigations have exonerated the transformer manufacturers from any responsibility and have led us to what we believe is the failure mechanism and to a relatively simple solution.

A conventional distribution transformer installation in the UK will typically be pole mounted with a casing earth connected to the metal transformer casing and running down the pole to where it is connected to a number of metal ground rods which are knocked into the ground at the base of the pole.

Each high voltage transformer termination, there being one such termination for each phase of a 3-phase transformer and there being two such terminations for a single phase transformer, has connected thereto a respective surge diverter or surge arrester device providing a path to ground via the transformer casing and the casing earth for lightning strike transients. On the low voltage side of the transformer there are corresponding terminations and there is additionally a neutral termination, and the neutral termination is connected to a neutral earth conductor which runs down the pole and is connected to a neutral ground constituted by one or more metal rods knocked into the ground. Conventional practice dictates that this neutral earth should be located between 3 and 5 metres distance from the transformer casing earth.

We have found that the resistance to ground of the transformer casing earth is typically of the order of 10 ohms. In the event of a lightning strike on one or more of the high voltage power lines connected to the transformer, the associated surge diverter(s) operate(s) to protect the high voltage winding of the transformer. This results in, typically, a 10KAmp 8/20 µsecs current flowing through the surge diverter(s) to ground via the typically 10 ohms transformer casing earth. An 8/20 µsecs transient current is one which peaks after 8 µsecs and decreases to half its peak value in 20 µsecs. This 10KA transient flowing through the 10 ohm transformer casing earth resistance results in the transformer casing transiently rising to a voltage of 100kV, and this high voltage transient appears between the transformer casing and the low voltage winding of the transformer where it is connected to the neutral earth. Now, the high voltage windings of an 11kV transformer will typically have an impulse voltage withstand of 75kV or 95kV, whereas the low voltage windings typically have only a 25kV or 30kV impulse voltage withstand, this being a feature of the transformer construction. The application of a 100kV transient to the transformer casing thus, we have found, can result in breakdown of the insulation of the transformer low voltage winding at its closest point to the casing with the result that a high transient current flows from the transformer casing to and through the low voltage winding and to ground via the neutral ground conductor. Our investigations have established that this mechanism is responsible for the failure of transformers during lightning activity, namely lightning currents passing to the transformer casing through surge diverters connected to the high voltage terminations of the transformer can give rise to surge voltages at the transformer casing which exceed the voltage withstand level of the low voltage winding. Additionally, the imposition of the 100kV transient upon the low voltage winding of the transformer can result in much higher transient voltages on the high tension windings as a result of the transformer action and this too can cause damage.

Having ascertained that the above-described mechanism is responsible for transformer failures during lightning activity, the solution to the problem of how to avoid such failures clearly is to provide overvoltage protection for the low voltage winding and this can be achieved by provision of a transient voltage clamping device, for example a suitably high voltage rated surge arrester device as described in GB-B-2 188 199, connected between the low voltage neutral and the transformer casing. The surge arrester device must have a high voltage rating because the use of a surge arrester with a continuous operating voltage equal to or not substantially greater than the low voltage supply, this being the teaching of GB-A-390 102, would not be satisfactory as premature failure of the arrester would occur in the event of a phase-to-earth fault arising on the high voltage side of the transformer.

Electric power distribution systems incorporate auto-reclosing circuit breaker devices which, in response to a sensed ground (earth) fault current on a power line caused for example by a squirrel shorting out a termination on the high voltage side of a transformer, will initially break the respective circuit for a period of typically 10 seconds (dead time) and will then automatically re-close and re-energize the circuit. Should the circuit still have a permanent earth fault on it the protection may take up to 10 seconds before opening the circuit breaker. The transient voltage clamping device that is provided for protection of the low voltage winding must be able to withstand, without failure, the voltage to which it would be subjected in such an event.

Accordingly, in order for a transient voltage clamping device coupled between the low voltage neutral termination of the transformer winding and the transformer casing to be capable of providing the requisite protection, the device must fulfil the following requirements, namely:
(a) it must be able to withstand, for the re-make period of the auto-reclosing circuit breaker device, the voltage to which it will be subjected when a ground fault condition exists on the high voltage side of the transformer; and
(b) it must be capable of clamping the voltage at the transformer casing relative to the neutral termination of the low voltage transformer winding to below the withstand voltage of the low voltage winding in the event of a lightning strike on one or more of the high voltage lines connected to the transformer.
For an 11kV power distribution system as used in the UK, these requirements would be satisfied by a transient voltage clamping device able to withstand without failure a voltage of 7kV for 10 seconds and able to clamp the voltage at the neutral termination of the low voltage winding of the transformer to not greater than 20kV for lightning currents of 10KA. A standard 6kV rated metal oxide surge arrester as currently manufactured by Bowthorpe EMP Limited of Stevenson Road, Brighton, Sussex, England as Type No. EGA6 satisfies these requirements.

The features of the present invention for which an exclusive property or privilege are claimed are set forth in the appended claims. The invention will be further explained in the following by reference to the accompanying drawings.

### Description of the Drawings:

Figure 1 is a schematic single phase diagram showing a prior art transformer installation; and
Figure 2 shows how the transformer installation according to the present invention differs from the prior art installation.

### Detailed Description of the Invention:

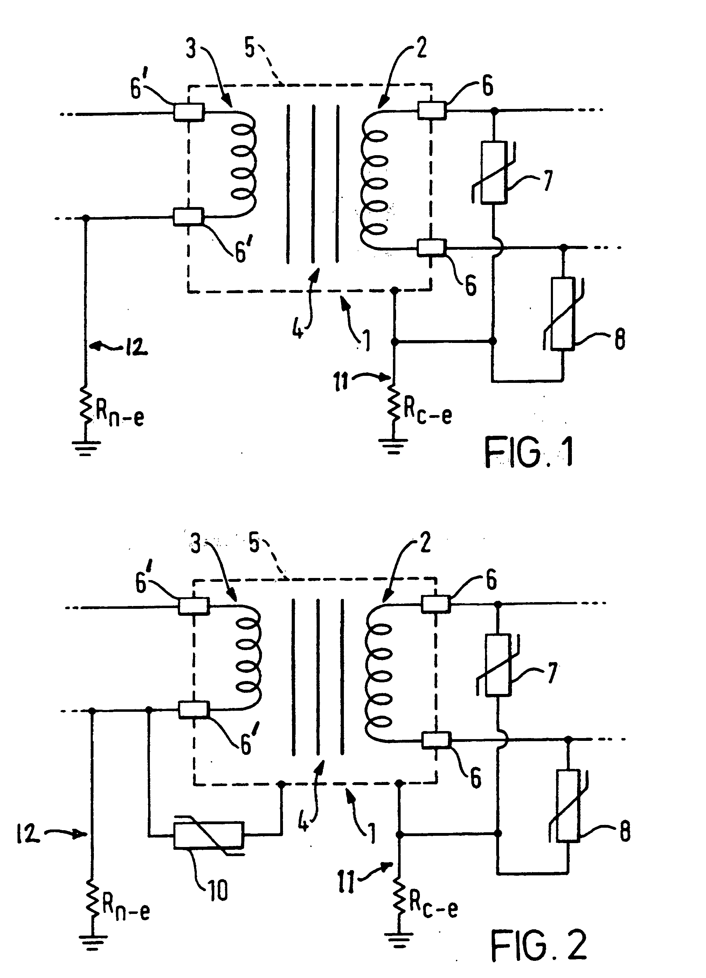

Referring first to Figure 1, this represents a single phase of a typical 3-phase transformer installation as presently employed in the UK for transforming the 11kV power transmission voltage to a phase-to-phase service voltage of 400V. Other phases of the installation have an equivalent structure. The three phase windings on the high voltage side of the transformer will conventionally be connected in delta configuration, and the three phase windings on the low voltage side will conventionally be star connected with the neutral point grounded.

The transformer 1 consists of high voltage and low voltage windings 2 and 3, respectively, upon a core structure 4, these being contained in an oil-filled or otherwise insulated metal casing or tank 5 which carries shedded insulating terminations 6 and 6' for the respective windings. Transformers of this kind are manufactured to British Electrical Supply Standards Institute Standard 35-1 and are available from South Wales Transformers, Treforest, Mid Glamorgan, Wales for example. High voltage surge arresters or diverters 7 and 8 are conventionally coupled between the high voltage terminations of the transformer and the transformer casing and may for example comprise duplex arc gaps.

In the field, the transformer casing is grounded as aforementioned at ground connection II and a ground resistance R_{c-e} of the order of 10 ohms is typical. It is conventional furthermore to provide a separate ground 12 for the neutral termination of the low voltage transformer winding and this gives rise to a resistance Rₙ₋ₑ of the same order of magnitude as R_{c-e}.

In the event of a lightning strike on a power line connected to the high voltage side of the transformer, the surge arrester 7 for example will operate to pass the lightning transient to.ground. A current typically of 10KA flows through the surge arrester 7 for a period of 8 to 20 µsecs and, given the ground resistance R_{c-e} of 10 ohms, the transformer casing transiently is elevated to a voltage of 100kV.

This 100kV casing voltage appears between the transformer casing and the grounded low voltage winding 3 of the transformer and, as mentioned hereinbefore, exceeds the typically 25kV withstand voltage of the low voltage windings. Transformer failure then results as a flashover occurs between the transformer casing and the low voltage winding. The high voltage winding of the transformer can also be damaged as the step-up ratio of the transformer causes a much higher voltage transient to be imposed on the high voltage windings as a result of the 100kV transient on the low voltage winding.

Figure 2, which otherwise is the same as Figure 1, shows the provision of a transient voltage clamping device constituted by a high voltage surge arrester 10 coupled between the neutral termination of the low voltage winding 3 of the transformer and the transformer casing 5. In the event of a lightning strike, as described above, giving rise to a high voltage transient between the transformer casing and the neutral termination of the low voltage transformer winding, the high voltage surge arrester 10 will provide a preferred discharge path as compared for example to a path from the transformer casing through the insulating medium or over the low voltage terminations of the transformer to the grounded low voltage winding. Provision of the high voltage surge arrester 10 thus protects the low voltage side of the transformer.

As previously explained, the high voltage surge arrester 10 must clamp the transformer casing to a voltage not exceeding the voltage withstand of the low voltage winding. Typically, the low voltage winding of an E.S.I. Standard 35-1 distribution class transformer has a voltage withstanding rating of 25kV, which means that the surge arrester 10 should preferably be selected to clamp the transformer casing to no greater than say 20kV under lightning strike conditions. A further consideration, as previously explained, is that the arrester 10 should be able to withstand without failure a ground fault condition on the high voltage side of the transformer for a predetermined time period, eg. 10 seconds. Such a ground fault condition, caused for example by shorting out of one of the transformer high voltage terminations to the transformer casing, puts the high tension line voltage onto the transformer casing and gives rise to a corresponding voltage across the surge arrester 10. Circuit breakers in the distribution system will not permit this condition to prevail for more than a predetermined time period, 10 seconds in the case of the 11kV power distribution system utilized in the UK, and the surge arrester 10 must be able to withstand the corresponding voltage loading of 7kV (11kV ö √3) for this period. A standard 6kV rated surge arrester Type No. EGA6 manufactured by Bowthorpe EMP Limited of Brighton, Sussex, England in accordance with the teachings of GB-B-2 188 199 meets these requirements.

It is preferred that in installations such as that represented by Figure 2, the surge diverters 7 and 8 are constituted by metal oxide surge arresters such as are described in GB-B-2 188 199 for example. Furthermore, spark gaps may be provided in parallel with the high voltage surge arresters 7, 8 for the purpose of ensuring that a path to ground remains for fault current in the event of surge arrester failure. The provision of such spark gaps has substantially no affect upon the present invention.

In areas which are highly susceptible to electrical storms, additional protection is obtainable by installation of low voltage surge arresters on the low voltage side of the transformer on the next pole downstream of the transformer.

In the practice of the present invention, it is necessary to ensure that the values of the ground path resistances R_{c-e} and Rₙ₋ₑ are kept low. Higher resistance values will exacerbate the stressing of the transformer windings.

Having thus described the present invention by reference to specific arrangements, it is to be well understood that modifications and variations to the described arrangements are possible without departure from the scope of the invention as set forth in the appended claims. For example, the Bowthorpe EMP Limited surge arrester Type No. EGA6 may be considered to be "over engineered" for the application of the present invention and an alternative, more simple surge arrester configuration may be preferred for the surge arrester 10 shown in Figure 2. Furthermore, whilst it is preferred that the surge arresters 7 and 8 shown in Figure 2 are of the metal oxide varistor type exemplified by the surge arrester described in GB-B-2 188 199, they could simply be constituted by arc gap devices, for example duplex gaps.

## Claims

1. A transformer (1) in or for an electrical power distribution system for transforming the high distribution voltage of the system into a low service voltage, the transformer having a ground connection (11) and the high voltage side (2) of the transformer including a surge diverter (7,8) connected between each high voltage termination (6) of the transformer and said ground connection (11), and the transformer having a neutral termination (6') on its low voltage side (3), whereby a transient voltage clamping device (10) is coupled between said neutral termination (6') and said ground connection (11), **characterized in that** said transient voltage clamping device (10) being selected so as to be capable of clamping the voltage at said neutral termination (6') to below the withstand voltage of the low voltage transformer winding (3) when, in use of the transformer, a lightning strike on the high voltage side (2) of the transformer causes one or more of said surge diverters (7,8) to operate so as to discharge the lightning strike to ground and thereby subject the transformer ground connection (11) to a transient high voltage.

2. A transformer as claimed in claim 1 wherein the withstand voltage of the low voltage transformer winding (3) is of the order of 25kV, and the transient voltage clamping device (10) that is coupled between said neutral termination (6') and said ground connection (11) is adapted to clamp the voltage at said neutral termination (6') to a voltage of the order of 20kV.

3. A transformer as claimed in claim 1 or 2 wherein the transient voltage clamping device (10) that is coupled between said neutral termination (6') and said ground connection (11) is selected so as to be capable of withstanding for a predetermined time period the voltage to which it would be subjected under a ground fault condition on the high voltage side (2) of the transformer.

4. A transformer as claimed in claim 3 wherein the high distribution voltage of the system is of the order of 11kV and the transient voltage clamping device (10) that is coupled between said neutral termination (6') and said ground connection (11) is selected so as to be capable of withstanding a voltage of the order of 7kV.

5. A transformer as claimed in claim 3 or 4 wherein said predetermined time period is about 10 seconds.

6. A single-phase transformer as claimed in any of the preceding claims.

7. A three-phase transformer as claimed in any of claims 1 to 5.

8. A transformer as claimed in any of the preceding claims wherein said neutral terminal (6') is connected to ground potential.

9. A transformer as claimed in claim 8 wherein the connection of said neutral terminal (6') to ground is by way of a conductor separate from the connection of said ground connection (11) of the transformer to ground.

10. A transformer as claimed in any of the preceding claims wherein said surge diverters (7,8) comprise arc gap devices.

11. A transformer as claimed in any of claims 1 to 9 wherein said surge diverters (7,8) comprise metal oxide varistor surge arresters.

12. A transformer as claimed in any of the preceding claims wherein said transient voltage clamping device (10) comprises a metal oxide varistor surge arrester.

13. An electrical power distribution system comprising a pole mounted transformer (1) according to any of the preceding claims and wherein low voltage surge arresters are provided on a next adjacent pole downstream of the low voltage side (3) of the transformer, said low voltage surge arresters coupling the low voltage lines to ground.

14. A method of protecting a distribution transformer in an electric power distribution system against the effect of a lightning strike, said electric power distribution system incorporating auto-reclosing circuit breaker devices responsive to a sensed ground fault current on a power line connected to the high voltage side of the transformer to temporarily break the respective circuit for a period of time before automatically reclosing and re-energizing the circuit to test for continuance of said ground fault whereupon, after a certain period of time and if the ground fault continues, the circuit breaker devices will again be opened, said distribution transformer having a grounded casing (4) and said method including connecting a transient voltage clamping device (10) between the neutral (6') of the low voltage winding (3) of the transformer and the grounded transformer casing (4), and being **characterized by** said transient voltage clamping device (10) being selected (a) to limit the transient voltage at the transformer casing (4) to below the withstand voltage of the low voltage transformer winding (3) in the event of a lightning strike and (b) to be capable of withstanding for said period of time a ground fault condition at the high voltage side (2) of the transformer.

## Patentansprüche

1. Transformator (1) in einem oder für ein Elektroenergieverteilungssystem für das Transformieren der hohen Versorgungsspannung des Systems in eine niedrige Betriebsspannung, wobei der Transformator einen Erdanschluß (11) aufweist, und wobei die Hochspannungsseite (2) des Transformators einen Überspannungsableiter (7, 8) umfaßt, der zwischen einem jeden Hochspannungsanschluß (6) des Transformators und dem Erdanschluß (11) geschaltet ist, und wobei der Transformator einen Mittelpunktanschluß (6') auf seiner Niederspannungsseite (3) aufweist, wobei eine Stoßspannungsklemmvorrichtung (10) zwischen dem Mittelpunktanschluß (6') und dem Erdanschluß (11) gekoppelt ist, **dadurch gekennzeichnet, daß** die Stoßspannungsklemmvorrichtung (10) so ausgewählt wird, daß sie in der Lage ist, die Spannung am Mittelpunktanschluß (6') auf unterhalb der Stehspannung der Niederspannungstransformatorwicklung (3) zu klemmen, wenn bei Benutzung des Transformators ein Blitzschlag auf der Hochspannungsseite (2) des Transformators bewirkt, daß ein oder mehrere der Überspannungsableiter (7, 8) funktionieren, um den Blitzschlag zur Erde zu entladen, und um dadurch den Transformatorerdanschluß (11) einer hohen Stoßspannung auszusetzen.

2. Transformator nach Anspruch 1, bei dem die Stehspannung der Niederspannungstransformatorwicklung (3) in der Größenordnung von 25 kV liegt und die Stoßspannungsklemmvorrichtung (10), die zwischen dem Mittelpunktanschluß (6') und dem Erdanschluß (11) gekoppelt ist, so ausgeführt ist, daß die Spannung am Mittelpunktanschluß (6') auf eine Spannung in der Größenordnung von 20 kV geklemmt wird.

3. Transformator nach Anspruch 1 oder 2, bei dem die Stoßspannungsklemmvorrichtung (10), die zwischen dem Mittelpunktanschluß (6') und dem Erdanschluß (11) gekoppelt ist, so ausgewählt wird, daß sie in der Lage ist, über eine vorgegebene Zeitdauer die Spannung auszuhalten, der sie in einem Erdschlußzustand auf der Hochspannungsseite (2) des Transformators unterworfen würde.

4. Transformator nach Anspruch 3, bei dem die hohe Versorgungsspannung des Systems in der Größenordnung von 11 kV liegt und die Stoßspannungsklemmvorrichtung (10), die zwischen dem Mittelpunktanschluß (6') und dem Erdanschluß (11) gekoppelt ist, so ausgewählt wird, daß sie in der Lage ist, eine Spannung in der Größenordnung von 7 kV auszuhalten.

5. Transformator nach Anspruch 3 oder 4, bei dem die vorgegebene Zeitdauer etwa 10 Sekunden beträgt.

6. Einphasentransformator nach einem der vorhergehenden Ansprüche.

7. Dreiphasentransformator nach einem der Ansprüche 1 bis 5.

8. Transformator nach einem der vorhergehenden Ansprüche, bei dem der Mittelpunktanschluß (6') mit dem Erdpotential verbunden ist.

9. Transformator nach Anspruch 8, bei dem die Verbindung des Mittelpunktanschlusses (6') mit der Erde mittels eines Leiters erfolgt, der separat von der Verbindung des Erdanschlusses (11) des Transformators mit der Erde ist.

10. Transformator nach einem der vorhergehenden Ansprüche, bei dem die Überspannungsableiter (7, 8) Lichtbogenstreckenvorrichtungen aufweisen.

11. Transformator nach einem der Ansprüche 1 bis 9, bei dem die Überspannungsableiter (7, 8) Metalloxid-Varistorüberspannungsableiter aufweisen.

12. Transformator nach einem der vorhergehenden Ansprüche, bei dem die Stoßspannungsklemmvorrichtung (10) einen Metalloxid-Varistorüberspannungsableiter aufweist.

13. Elektroenergieverteilungssystem, das einen mastmontierten Transformator (1) nach einem der vorhergehenden Ansprüche aufweist, und bei dem Niederspannungsstoßableiter an einem nächsten benachbarten Mast nach der Niederspannungsseite (3) des Transformators vorhanden sind, wobei die Niederspannungsstoßableiter die Niederspannungsleitungen mit der Erde koppeln.

14. Verfahren zum Schützen eines Netztransformators in einem Elektroenergieverteilungssystem gegen die Auswirkung eines Blitzschlages, wobei das Elektroenergieverteilungssystem automatisch wiedereinschaltende Trennschaltervorrichtungen enthält, die auf einen gemessenen Erdfehlerstrom in einer Stromleitung ansprechen, die mit der Hochspannungsseite des Transformators verbunden ist, um zeitweilig den betreffenden Stromkreis über eine Zeitdauer zu unterbrechen, bevor der Stromkreis automatisch wiedereingeschaltet und wieder mit Strom versorgt wird, um auf ein Fortbestehen des Erdschlusses zu testen, worauf nach einer bestimmten Zeitdauer, und wenn der Erdschluß fortbesteht, die Trennschaltervorrichtungen wieder geöffnet werden, wobei der Netztransformator ein geerdetes Gehäuse (4) aufweist, und wobei das Verfahren das Schalten einer Stoßspannungsklemmvorrichtung (10) zwischen dem Mittelpunktanschluß (6') der Niederspannungswicklung (3) des Transformators und dem geerdeten Transformatorgehäuse (4) umfaßt, und **dadurch gekennzeichnet, daß** die Stoßspannungsklemmvorrichtung (10) ausgewählt wird, um (a) die Stoßspannung am Transformatorgehäuse (4) auf unterhalb der Stehspannung der Niederspannungstransformatorwicklung (3) im Fall eines Blitzschlages zu begrenzen, und um (b) in der Lage zu sein, einen Erdschlußzustand auf der Hochspannungsseite (2) des Transformators über die Zeitdauer auszuhalten.

## Revendications

1. Transformateur (1) dans ou pour un système de distribution d'énergie électrique, pour transformer la tension de distribution élevée du système dans une basse tension de service, le transformateur comportant une connexion de masse (11) et le côté haute tension (2) du transformateur englobant un dispositif de parasurtension (7, 8), connecté entre chaque borne haute tension (6) du transformateur et ladite connexion de masse (11), le transformateur comportant une borne neutre (6') sur son côté basse tension (3), un dispositif de blocage de la tension transitoire (10) étant couplé entre ladite borne neutre (6') et ladite connexion de masse (11), **caractérisé en ce que** ledit dispositif de blocage de la tension transitoire (10) est sélectionné de sorte à bloquer la tension au niveau de ladite borne neutre (6') à une valeur inférieure à la tension de tenue de l'enroulement basse tension du transformateur (3), lorsque, lors de l'utilisation du transformateur, un coup de foudre sur le côté haute tension (2) du transformateur entraîne le fonctionnement d'un ou de plusieurs desdits dispositifs de parasurtension (7,8) de sorte à décharger le coup de foudre à la masse et exposer ainsi la connexion de masse du transformateur (11) à une haute tension transitoire.

2. Transformateur selon la revendication 1, dans lequel la tension de tenue de l'enroulement basse tension du transformateur (3) est de l'ordre de 25 kV, le dispositif de blocage de la tension transitoire (10) couplé entre ladite borne neutre (6') et ladite connexion de masse (11) étant destiné à bloquer la tension au niveau de ladite borne neutre (6') à une tension de l'ordre de 20 kV.

3. Transformateur selon les revendications 1 ou 2, dans lequel le dispositif de blocage de la tension transitoire (10) couplé entre ladite borne neutre (6') et ladite connexion de masse (11) est sélectionné de sorte à pouvoir résister pendant une période de temps prédéterminée à la tension à laquelle il serait exposé en cas d'un état de défaut de masse sur le côté haute tension (2) du transformateur.

4. Transformateur selon la revendication 3, dans lequel la haute tension de distribution du système est de l'ordre de 11 kV, le dispositif de blocage de la tension transitoire (10) couplé entre ladite borne neutre (6') et ladite connexion de masse (11) étant sélectionné de sorte à pouvoir résister à une tension de l'ordre de 7 kV.

5. Transformateur selon les revendications 3 ou 4, dans lequel ladite période de temps prédéterminée correspond à environ 10 secondes.

6. Transformateur monophasé selon l'une quelconque des revendications précédentes.

7. Transformateur triphasé selon l'une quelconque des revendications 1 à 5.

8. Transformateur selon l'une quelconque des revendications précédentes, dans lequel ladite borne neutre (6') est connectée au potentiel de masse.

9. Transformateur selon la revendication 8, dans lequel la connexion de ladite borne neutre (6') à la masse se fait par l'intermédiaire d'un conducteur séparé de la connexion de ladite connexion de masse (11 ) du transformateur à la masse.

10. Transformateur selon l'une quelconque des revendications précédentes, dans lequel lesdits dispositifs de parasurtension (7, 8) comprennent des dispositifs éclateurs.

11. Transformateur selon l'une quelconque des revendications 1 à 9, dans lequel lesdits dispositifs de parasurtension (7, 8) comprennent des dispositifs d'arrêt de surtension à varistance en oxyde métallique.

12. Transformateur selon l'une quelconque des revendications précédentes, dans lequel ledit dispositif de blocage de la tension transitoire (10) comprend un dispositif d'arrêt de surtension à varistance en oxyde métallique.

13. Système de distribution d'énergie électrique comprenant un transformateur monté sur poteau (1) selon l'une quelconque des revendications précédentes, et comportant des dispositifs d'arrêt de surtension à basse tension sur un poteau adjacent en aval du côté basse tension (3) du transformateur, lesdits dispositifs d'arrêt de surtension à basse tension reliant les lignes basse tension à la masse.

14. Procédé de protection d'un transformateur de distribution dans un système de distribution d'énergie électrique contre l'effet d'un coup de foudre, ledit système de distribution d'énergie électrique incorporant des disjoncteurs de circuit à réenclenchement automatique répondant à un courant de défaut de masse détecté sur une ligne de transport d'énergie connectée sur le côté haute tension du transformateur, pour couper temporairement le circuit respectif pendant une certaine période de temps avant de réenclencher et ré-exciter automatiquement le circuit pour tester si ledit défaut de masse est maintenu, à la suite de quoi, après une période de temps déterminée et en cas de maintien du défaut de masse, les disjoncteurs de circuit sont de nouveau ouverts, ledit transformateur de distribution comportant un boîtier mis à la masse (4), ledit procédé englobant la connexion d'un dispositif de blocage de la tension transitoire (10) entre la borne neutre (6') de l'enroulement basse tension (3) du transformateur et le boîtier mis à la masse du transformateur (4), **caractérisé en ce que** ledit dispositif de blocage de la tension transitoire (10) est sélectionné de sorte (a) à limiter la tension transitoire au niveau du boîtier du transformateur (4) à une valeur inférieure à la tension de tenue de l'enroulement basse tension du transformateur (3) en cas d'un coup de foudre, et (b) à pouvoir résister pendant ladite période de temps à un état de défaut de masse au niveau du côté haute tension (2) du transformateur.
